# FASCICULE DE BREVET EUROPEEN

(11) **EP 2 104 650 B1**
(45) Date de publication et mention de la délivrance du brevet: **11.04.2012**
(21) Numéro de dépôt: 07871786.5
(22) Date de dépôt: 04.12.2007
(51) Int. Cl.: C02F 9/02, C02F 9/04

(54) **PROCEDE POUR LA CLARIFICATION PAR FLOTTATION D'EAUX DIFFICILES**
VERFAHREN ZUR KLÄRUNGSFLOTATION VON SCHWEREM WASSER
METHOD FOR THE FLOTATION-CLARIFICATION OF DIFFICULT WATER

(30) Priorité: 13.12.2006 FR 0610866
(43) Date de publication de la demande: 30.09.2009
(73) Titulaire: DEGREMONT, 92500 Rueil-Malmaison (FR)
(72) Inventeur: VION, Patrick, F-78800 Houilles (FR); BROUTIN, Céline, 78290 Croissy sur Seine (FR); GARRIOU, Christian, 78400 Chatou (FR)
(74) Mandataire: Michardière, Bernard
(86) Numéro de dépôt international: PCT/FR2007/001986
(87) Numéro de publication internationale: WO 2008/087264

(56) Documents cités:
- EP-A- 1 533 277
- FR-A1- 2 715 581
- FR-A1- 2 744 119
- US-A1- 2004 026 657

## Description

L'invention est relative à un procédé pour la clarification par flottation d'eaux difficiles, en particulier d'eaux de surface chargées ou d'eaux résiduaires urbaines, voire industrielles, d'eaux pluviales et généralement tous types d'eaux difficilement flottables en particulier à fort pourcentage de matières minérales, ou pour la clarification de tous types d'eaux nécessitant l'injection d'un adjuvant de floculation et précédant des filtres ou des technologies membranaires comme l'ultrafiltration, comportant :
- une étape de coagulation au cours de laquelle une dose de coagulant est injectée dans l'eau à traiter,
- une étape de floculation au cours de laquelle est effectuée une injection de floculant dans l'eau, après l'étape de coagulation, pour agglomérer les particules en suspension sous forme de flocs,
- puis une étape de flottation au cours de laquelle, dans un appareil de flottation, l'eau floculée est mélangée avec une émulsion de micro-bulles de gaz, généralement de l'air, qui s'accrochent aux flocs et les font monter en surface où ils sont collectés et évacués alors que l'eau clarifiée est évacuée par le fond de l'appareil de flottation.

Plus particulièrement, l'invention concerne un procédé de flottation pour la clarification d'eaux dont la turbidité est supérieure à 30NTU et la concentration en matières en suspension MES est supérieure à 30mg/l. De plus, à la vue des conséquences inattendues de l'invention, son application peut être étendue même aux eaux difficiles.

La flottation est une technologie de clarification (séparation solide-liquide) qui constitue une alternative à la décantation, au moins pour certains types d'eau.

Selon cette technologie de flottation, les étapes de coagulation et de floculation permettent dans un premier temps d'agglomérer les particules en suspension sous forme de flocs. Puis l'eau floculée est mélangée avec un "lait" (c'est-à-dire une émulsion) de micro-bulles de gaz, généralement d'air, dont le diamètre moyen est compris entre 40 et 50 microns. Ces micro-bulles s'accrochent aux flocs qui, ainsi allégés, ont tendance à monter vers la surface de l'appareil de flottation (appelé flottateur) où ils s'accumulent pour former un gâteau ou lit de boues. Les boues sont collectées en surface de l'appareil de flottation, alors que l'eau clarifiée est évacuée par le fond de l'appareil.

Une partie de l'eau clarifiée est pompée débit généralement compris entre 5 et 15 % du débit d'eau à traiter en clarification), à une pression de l'ordre de 4 x 10⁵ à 6 x 10⁵ Pa (4 à 6 bars) dans un ballon spécifique, appelé ballon de pressurisation dans lequel l'air se dissout en grande quantité, c'est-à-dire selon une concentration égale à 3 à 5 fois la concentration maximale de l'air dans l'eau à la pression atmosphérique. Par une détente subite à la pression atmosphérique, dans l'appareil de flottation, l'air est placé en condition de sursaturation et génère des micro-bulles. Les systèmes de détente sont placés dans une zone spécifique dans laquelle est assuré le mélange des micro-bulles avec l'eau floculée.

Selon la technologie de décantation, un floc doit être dense et/ou de grande taille pour être physiquement séparé de l'eau dans un décanteur, en chutant vers le fond.

Par contre, selon la technologie de flottation, il suffit que le floc soit bien formé pour qu'il puisse être séparé par flottation, d'où l'importance des étapes préliminaires de coagulation et de floculation.

La coagulation consiste en l'ajout d'un réactif, le coagulant des cations trivalents), notamment sels de fer ou d'aluminium, permettant la déstabilisation des particules colloïdales présentes dans l'eau et la neutralisation de toutes les charges électronégatives de ces particules. Au cours de cette étape, les particules neutralisées commencent à s'agglomérer pour former des micro-flocs. Ces micro-flocs sont trop petits pour décanter et même trop petits pour s'accrocher aux micro-bulles.

Dans tous les cas, une étape de floculation est nécessaire pour faire grossir ces flocs. Une étape de floculation par agitation mécanique ou de floculation statique permet d'atteindre la taille de floc critique pour qu'il s'accroche aux micro-bulles.

Lors de cette étape de floculation, l'injection d'un adjuvant de floculation (polymère, polymère minéral tel que silice activée, polymère naturel tel qu'amidon ou alginate, ou plus généralement polymère de synthèse) est parfois nécessaire, mais il est indispensable pour la clarification des eaux de surface chargées. L'adjuvant de floculation permet de favoriser l'agglomération des flocs trop petits de manière à former des flocs de taille suffisante pour flotter, mais permet également de donner de la cohésion au floc. Ainsi après flottation de ces flocs, les boues formées sont plus stables. Cependant, l'addition d'un adjuvant de floculation peut entraîner la décantation de flocs dans les floculateurs et parfois même dans la zone de flottation, particulièrement si la charge entrante en matières en suspension (MES) est trop grande.

De ce fait, les applications de la flottation sont souvent limitées à la clarification des eaux peu chargées (c'est-à-dire dont la turbidité est inférieure à 30NTU et la concentration en matières en suspension MES est inférieure à 30mg/l) en particulier à des eaux de lac, de forage, à l'eau de mer ou à la clarification des effluents industriels spécifiques ou à la clarification des eaux de lavage de filtres biologiques. Jusqu'à présent, la technique de flottation n'a pu étendre efficacement son domaine d'application au vaste domaine des eaux de surface chargées en matières en suspension à plus de 30mg/l, à fort pourcentage en matières minérales d'environ 50%, comme les eaux de rivière, mais aussi au domaine des eaux résiduaires, des eaux de lavage, des eaux pluviales. En effet, il est difficile voire impossible de "flotter" des particules denses et/ou de grande taille.

Des tentatives ont cependant été effectuées.
■ Des flottateurs classiques ont été équipés de racleurs de fond pour récupérer les boues décantées. Cependant, l'eau clarifiée est chargée et le passage du racleur dégrade davantage la qualité de l'eau flottée en remettant en suspension une partie des boues décantées.
■ De nouveaux flottateurs, notamment selon la demande de brevet FR 2 837 197, intègrent un prédécanteur dans le floculateur et peuvent répondre en partie au problème. Le taux de matières en suspension entrant dans le flottateur est réduit du fait de l'élimination d'une grande partie de ces matières dans le prédécanteur.
■ Le brevet européen EP1533277 divulgue un procédé de flottation selon l'état de la technique.

Or, dans les deux cas précédents, il s'avère qu'au-delà d'un seuil critique de matières entrantes dans le flottateur autour de 30mg/l pour les flottateurs classiques et de 100mg/l pour les flottateurs intégrant un prédécanteur, les micro-bulles ont du mal à s'accrocher sur les flocs. En effet, ces boues composées d'un fort taux de matières minérales sont denses et présentent ainsi peu de surface pour l'accrochage des micro-bulles. Les boues flottées sont instables, elles ont tendance à se décrocher et des morceaux de gâteau polluent davantage l'eau clarifiée.

Selon les règles de l'art, dans les procédés antérieurs évoqués, le coagulant est injecté en une fois dans un mélangeur en ligne (mélangeur statique, ...) ou dans un mélangeur agité (flash mix, ...), et toujours en amont de l'injection du floculant.

L'invention a pour but, surtout, de fournir un procédé qui permet de clarifier par flottation des eaux chargées en matières en suspension à plus de 30mg/l (équivalent à environ 30NTU) ou plus de 100mg/l (équivalent à environ 100NTU) suivant l'intégration ou non d'un prédécanteur en amont de la flottation, tout en conservant une qualité optimale d'eau flottée et ce quelque soit le type de flottateur, classique ou avec prédécanteur intégré.

L'invention propose de mettre en oeuvre le coagulant en deux points :
- une première dose de coagulant est injectée en tête d'unité, en amont de l'injection de floculant,
- une deuxième dose de coagulant est additionnée, contrairement aux règles de l'art, après l'addition du floculant.

Le procédé selon l'invention est ainsi caractérisé en ce que l'étape de floculation comprend :
- une zone de mélange du floculant,
- suivie d'une zone de mélange d'une deuxième injection de coagulant, effectuée en aval de l'injection du floculant et en amont de la flottation,
- suivie d'une zone de formation d'un type de floc unique et structuré, adapté à une flottation en une seule étape.

Les résultats obtenus grâce à l'injection en deux points selon l'invention sont surprenants. Le taux d'élimination des matières en suspension dans l'eau brute est considérablement augmenté.

L'eau brute à traiter peut présenter une concentration en matières en suspension supérieure à 30 mg/l (équivalent à environ 30NTU) ou supérieure à 100 mg/l (équivalent à environ 100NTU) suivant l'intégration ou non d'un prédécanteur en amont de la flottation.

Le procédé selon l'invention peut être appliqué à une eau brute à traiter qui est difficile et nécessite l'injection d'un adjuvant de floculation, le traitement selon le procédé précédant des filtres ou des technologies membranaires comme l'ultrafiltration

De préférence, la dose totale de coagulant injecté est répartie de la manière suivante :
- première injection lors de l'étape de coagulation, en amont de la floculation : 10 à 70 % en poids de la dose totale de coagulant,
- deuxième injection, en aval de l'injection du floculant et en amont de la flottation : 30 à 90 % en poids de la dose totale de coagulant.

La répartition de la dose totale de coagulant peut être effectuée à environ 50% pour chacune des deux injections.

Lors de l'étape de flottation l'émulsion de micro-bulles peut être obtenue en pompant une fraction de l'eau clarifiée et en la pressurisant dans un ballon pour dissoudre une grande quantité de gaz, notamment d'air, et générer les micro-bulles par détente du liquide pressurisé dans l'appareil de flottation ; selon l'invention la pression de pressurisation dans le ballon peut être réduite d'environ 1 bar (classiquement de 5bars à 4bars). Plus généralement, la pression de pressurisation dans le ballon est choisie suffisamment faible pour que la taille (ou diamètre moyen) des micro-bulles soit au moins égale à 60 µm (a priori défavorable à la flottation).

Une installation pour la mise en oeuvre du procédé défini précédemment comporte des moyens d'injection d'une deuxième dose de coagulant en aval de l'injection du floculant et en amont de la flottation.

L'installation peut comporter un ballon de pressurisation pour générer les micro-bulles par détente du liquide pressurisé dans l'appareil de flottation ; la pression de pressurisation dans le ballon peut être choisie suffisamment faible pour que la taille des micro-bulles soit au moins égale à 60 µm. La pression de pressurisation dans le ballon peut être réduite jusqu'à 4bars.

L'invention consiste, mises à part les dispositions exposées ci-dessus, en un certain nombre d'autres dispositions dont il sera plus explicitement question ci-après à propos d' exemples décrit avec référence aux dessins annexés, mais qui ne sont nullement limitatifs. Sur ces dessins :
Fig. 1 est un schéma d'une ligne de traitement selon l'état de la technique pour clarifier des eaux de surface chargées ou non.
Fig.2 est un schéma d'une ligne de traitement selon l'invention pour clarifier des eaux de surface chargées ou non, et
Fig.3 est un schéma illustrant les phénomènes du traitement selon l'invention.

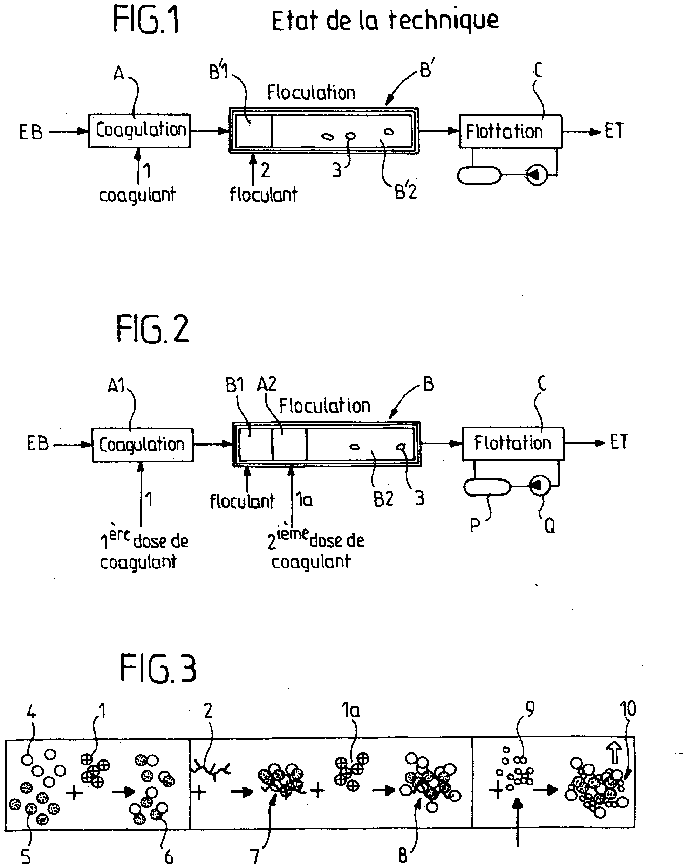

En se reportant à Fig.1, on peut voir une ligne de traitement classique pour clarifier des eaux de surface. Cette ligne de traitement met en oeuvre un procédé habituel qui se décompose de la manière suivante :
- une étape de coagulation A avec addition d'un coagulant 1 à l'eau brute EB à traiter,
- une étape de floculation B' qui reçoit l'eau sortant de l'étape de coagulation, et qui comprend une zone B'1 de mélange du floculant 2, et une zone B'2 de grossissement des flocs 3 favorisé par une agitation mécanique ou par des systèmes statiques (non représentés)
- et enfin, une étape C de séparation par flottation, avec émulsion de micro-bulles de gaz. Les boues sont récupérées en surface, et l'eau traitée ET est récupérée en partie basse du flottateur.

Fig. 2 illustre schématiquement une ligne de traitement mettant en oeuvre le procédé selon l'invention qui se décompose de la manière suivante :
- une étape de coagulation A1 avec addition d'un coagulant 1 à l'eau brute à traiter EB,
- une étape de floculation B comprenant :
   une zone B1 de mélange du floculant 2, suivie d'
   une zone de mélange A2 d'une deuxième injection de coagulant 1a,
   suivie d'une zone B2 de grossissement des flocs 3 favorisé par une agitation mécanique ou par des systèmes statiques,
- et enfin, une étape C de séparation par flottation.

Dans le cas des eaux de surface peu chargées, c'est à dire ayant une turbidité inférieure à 30 NTU avec une concentration en MES inférieure à 30 mg/l, l'utilisation de la ligne de traitement de Fig.1 avec une seule injection de coagulant est satisfaisante. Par contre cette ligne de traitement ne donne pas des résultats acceptables pour les eaux de surface chargées, ayant une turbidité supérieure à 30 NTU, et une concentration en MES supérieure à 30mg/l.

La ligne de traitement selon Fig.2, conforme à l'invention, permet un traitement efficace de telles eaux de surface chargées, ayant une turbidité supérieure à 30 NTU et une concentration en MES supérieure à 30 mg/l, grâce à l'injection supplémentaire A2 de coagulant.

Les commentaires qui suivent proposent une explication possible au résultat surprenant obtenu avec référence à Fig.3.

Une eau chargée contient des colloïdes 4 et beaucoup de matières minérales 5 (pourcentage supérieur à 50%). Lors de l'addition du coagulant 1, les charges négatives des colloïdes 4 sont neutralisées par les cations trivalents du coagulant 1. Puis les colloïdes neutralisés ainsi que les matières minérales, sont inclus dans des précipités d'hydroxyde pour former des micro-flocs 6 plus denses dus à la présence des matières minérales 5.

Pendant la floculation et par l'addition du floculant 2, les flocs s'agglomèrent et grossissent pour former au final des flocs plus denses et plus compacts 7.

La deuxième injection de coagulant 1a provoque la formation de précipités d'hydroxyde qui s'agglomèrent alors autour du floc pour lui donner une structure spatiale 8 plus volumineuse en fin d'étape de floculation. La structure de ce floc ainsi formé permet l'accroche d'un nombre plus important de micro-bulles 9 facilitant la flottation et assurant par la suite la stabilité des boues flottées 10.

L'importance des résultats obtenus est concrétisée par les exemples qui suivent.

### Exemples :

Les essais suivants ont été réalisés sur une eau de Seine chargée ou dopée (de 50 à 300 NTU environ).

Les caractéristiques de l'eau brute sont :
- Turbidité eau brute EB = 50 à 300 NTU,
- MES eau brute EB = 70 à 300 mg/L,
- Température = 10 à 18°C.

Ces essais ont été effectués sur une unité pilote de flottation à un débit de 12 m³/h comprenant :
- une étape de coagulation avec mélange du coagulant,
- l'injection de floculant dans une cuve agitée,
- l'injection du coagulant dans la zone agitée formée par la surverse alimentant le floculateur statique,
- une étape de floculation statique,
- une cellule de flottation de section 0,4 m² correspondant à une vitesse de 30 m/h.

Le système de pressurisation/détente (voir Fig.2) se compose d'un ballon de pressurisation P dans lequel est pressurisée par une pompe Q une partie de l'eau clarifiée prélevée dans le flottateur, pour être ensuite réinjectée dans le flottateur, selon une détente subite à la pression atmosphérique. Le ballon P fonctionne à 4 bars, et est relié à des systèmes de détente assurant la formation de micro-bulles de taille d'environ 40 - 50 µm. Dans ces conditions, le taux de recirculation est d'environ 10 %.

Les résultats obtenus sont :
- **Pour turbidité eau brute EB = 350 NTU // MES EB = 330 mg/L**
   *1) Selon l'état de la technique*
      Dose de coagulant = 40 ppm - avec une seule injection
      Dose de polymère = 0,4 ppm
         ⇒ Turbidité de l'eau traitée ET = **140 NTU**
            MES de l'eau traitée ET = 78 mg/L.
   *2) Selon l'invention*
      Dose de coagulant = 20 ppm (1^{ère} injection) + 20 ppm (2^{ème} injection)
      Dose de polymère = 0,4 ppm.
         ⇒ Turbidité de l'eau traitée ET = **4,9 NTU**
            MES de l'eau traitée ET = 9,7 mg/L.
- **Pour turbidité eau brute EB = 100 NTU // MES EB = 100 mg/L**
   *3) Selon l'état de la technique*
      Dose de coagulant = 40 ppm (une seule injection)
      Dose de polymère = 0,4 ppm
         ⇒ Turbidité eau traitée ET = **4,5 NTU**
            MES eau traitée ET = 9,2 mg/L.
   *4) Selon l'invention*
      Dose de coagulant = 20 ppm (1^{ère} injection) + 20 ppm (2^{ème} injection)
      Dose de polymère = 0,4 ppm.
         ⇒ Turbidité eau traitée ET = **1,3 NTU**
            MES eau traitée ET = 4,4 mg/L.

Les résultats des essais montrent que l'injection du coagulant en deux points permet de favoriser l'accrochage bulles-flocs, d'augmenter la vitesse ascensionnelle des flocs et de stabiliser les boues flottées. Le taux d'élimination des matières en suspension de l'eau brute est ainsi supérieur à 95 % avec pour conséquences ou avantages inattendus :
1/ Une amélioration de la qualité de l'eau flottée car il est possible de diminuer la pression dans le ballon de pressurisation P prévu pour la formation des bulles dans la cellule de flottation. Contrairement aux règles de l'art qui préconisent une augmentation de la pression et du taux de pressurisation dans le cas de la clarification des eaux de surface chargées, on observe une amélioration de la qualité de l'eau flottée en réduisant la pression dans le ballon, cette pression pouvant être réduite jusqu'à 4bars. La qualité de l'eau flottée est améliorée de 20 % environ traduisant une plus grande stabilité des boues flottées. Cette réduction de pression entraîne une taille de bulles plus importante (vitesse ascensionnelle plus importante) qui ne peuvent s'accrocher que sur des flocs plus volumineux et plus structurés.
   Cette technique de baisse de pression est donc adaptée à l'invention et à tous les flocs de structure spatiale importante comme :
   - les flocs formés avec un excès de coagulant et sans injection de floculant,
   - les flocs de nature biologique, etc...
2/ Un allongement des cycles de filtration type filtres à sable derrière le flottateur : la deuxième injection de coagulant permet de structurer le floc (structure spatiale du floc volumineuse) mais aussi de neutraliser le polymère résiduel au très fort pouvoir colmatant, lui-même injecté en amont de la deuxième injection de coagulant. Les durées de cycles de filtration (entre deux lavages) sont ainsi augmentées. A titre d'exemple, la durée d'un cycle sur filtre à sable initialement de 18h a été rallongée à 30 h.
3/ Certaines technologies à membrane (ultrafiltration) interdisent l'utilisation du polymère sur leur prétraitement du fait de son pouvoir colmatant. Ainsi la flottation avec injection de floculant ne peut pas être utilisée en prétraitement dans des cas difficiles comme les eaux chargées. L'invention permet alors d'utiliser la flottation en prétraitement de l'ultrafiltration et ce même sur des eaux chargées.

L'invention peut s'appliquer quel que soit le type de floculateur en amont de la flottation. Cependant, les risques de décantation dans les floculateurs statiques ou agités à basse énergie sont importants. Il convient de prévoir des systèmes soit de remise en suspension avec des hélices à fortes vitesses, soit de récupération de boues tels que racleurs ou zone de décantation avec pompes d'extraction.

## Revendications

1. Procédé pour la clarification par flottation d'eaux difficiles dont la turbidité est supérieure à 30 NTU et la concentration en matières en suspension MES supérieure à 30 mg/L, en particulier d'eaux de surface chargées, ou d'eaux résiduaires urbaines, ou industrielles, d'eaux pluviales et tous types d'eaux difficilement flottables, en particulier à fort pourcentage de matières minérales, ou pour la clarification de tous types d'eaux nécessitant l'injection d'un adjuvant de floculation et précédant des filtres ou des technologies membranaires comme l'ultrafiltration, comportant :
- une étape de coagulation (A1) au cours de laquelle une dose de 10 à 70% en poids de la dose totale de coagulant (1) est injectée dans l'eau à traiter, le coagulant étant constitué de cations trivalents, en particulier sels de fer ou d'aluminium,
- une étape de floculation (B) au cours de laquelle est effectuée une injection de floculant (2) dans l'eau, après l'étape de coagulation, pour agglomérer les particules en suspension sous forme de flocs, cette étape de floculation comprenant :
- l'injection de floculant dans une zone (B1) de mélange du floculant (2)
- suivie d'une deuxième injection de coagulant (1a), de 30 à 90 % en poids de la dose totale, effectuée en aval de l'injection du floculant, dans une zone de mélange (A2)
- le grossissement des flocs (3), adaptés à une flottation en une seule étape, dans une zone (B2), à la suite de la zone de mélange (A2),
- et enfin, une étape (C) de séparation par flottation au cours de laquelle, dans un appareil de flottation, l'eau floculée est mélangée avec une émulsion de micro-bulles de gaz, généralement de l'air, qui s'accrochent aux flocs et les font monter en surface où ils sont collectés et évacués alors que l'eau clarifiée est évacuée par le fond de l'appareil de flottation.

2. Procédé selon la revendication 1, **caractérisé en ce que** l'eau brute à traiter pour les flottateurs précédés d'un pré-décanteur présente une turbidité supérieure à 100 NTU et une concentration en matières en suspension MES supérieure à 100mg/L.

3. Procédé selon la revendication 1 ou 2, **caractérisé en ce qu'**il est appliqué à une eau brute à traiter qui est difficile et nécessite l'injection d'un adjuvant de floculation, le traitement selon le procédé précédant des filtres ou des technologies membranaires comme l'ultrafiltration.

4. Procédé selon l'une quelconque des revendications précédentes, **caractérisé en ce que** la répartition de la dose totale de coagulant est effectuée à environ 50% pour chacune des deux injections.

5. Procédé selon l'une quelconque des revendications précédentes, selon lequel lors de l'étape de flottation l'émulsion de micro-bulles est obtenue en pompant une fraction de l'eau clarifiée et en la pressurisant dans un ballon (P) pour dissoudre une grande quantité de gaz, notamment d'air, et générer les micro-bulles par détente du liquide pressurisé dans l'appareil de flottation, **caractérisé en ce que** la pression de pressurisation dans le ballon (P) est réduite jusqu'à 4 bars.

6. Procédé selon l'une quelconque des revendications précédentes, selon lequel lors de l'étape de flottation l'émulsion de micro-bulles est obtenue en pompant une fraction de l'eau clarifiée et en la pressurisant dans un ballon (P) pour dissoudre une grande quantité de gaz, notamment d'air, et générer les micro-bulles par détente du liquide pressurisé dans l'appareil de flottation, **caractérisé en ce que** la pression de pressurisation dans le ballon (P) est choisie suffisamment faible pour que la taille des micro-bulles soit au moins égale à 60 µm.

## Claims

1. Method for the clarification of water difficult to treat by flotation, said water having a turbidity of greater than 30 NTU and a concentration of suspended matter SM of greater than 30 mg/l, in particular polluted surface water, or municipal or industrial wastewater, rainwater and all types of water difficult to treat by flotation, in particular having a high percentage of mineral matter, or for the clarification of all types of water requiring the injection of a flocculation aid and preceding filters or membrane technologies such as ultrafiltration, comprising:
- a coagulation step (A1) during which a dose of 10 to 70% by weight of the total dose of coagulant (1) is injected into the water to be treated, the coagulant consisting of trivalent cations, in particular iron or aluminium salts;
- a flocculation step (B) during which a flocculant (2) is injected into the water after the coagulation step, in order to agglomerate the suspended particles in the form of flocs, this flocculation step comprising:
- the injection of flocculant into a zone (B1) for mixing the flocculant (2);
- followed by a second injection of coagulant (1a), of 30 to 90% by weight of the total dose, carried out downstream of the injection of the flocculant, in a mixing zone (A2);
- the swelling of the flocs (3), suitable for flotation in a single step, in a zone (B2), following the mixing zone (A2); and finally
- a flotation separation step (C) during which, in a flotation apparatus, the flocculated water is mixed with an emulsion of gas microbubbles, generally air microbubbles, which become attached to the flocs and make them rise to the surface, where they are collected and removed, while the clarified water is removed via the bottom of the flotation apparatus.

2. Method according to Claim 1, **characterized in that** the raw water to be treated for the flotation units preceded by a pre-settler has a turbidity of greater than 100 NTU and a concentration of suspended matter SM of greater than 100 mg/l.

3. Method according to Claim 1 or 2, **characterized in that** it is applied to a raw water to be treated which is difficult to treat and requires the injection of a flocculation aid, the treatment according to the method preceding filters or membrane technologies such as ultrafiltration.

4. Method according to any one of the preceding claims, **characterized in that** the total coagulant dose is distributed at about 50% for each of the two injections.

5. Method according to any one of the preceding claims, in which, during the flotation step, the microbubble emulsion is obtained by pumping a fraction of the clarified water and pressurizing it in a tank (P) in order to dissolve a large amount of gas, especially air, and to generate the microbubbles by expansion of the pressurized liquid in the flotation apparatus, **characterized in that** the pressurizing pressure in the tank (P) is reduced down to 4 bar.

6. Method according to any one of the preceding claims, in which, during the flotation step, the microbubble emulsion is obtained by pumping a fraction of the clarified water and pressurizing it in a tank (P) in order to dissolve a large amount of gas, especially air, and to generate the microbubbles by expansion of the pressurized liquid in the flotation apparatus, **characterized in that** the pressurizing pressure in the tank (P) is chosen to be low enough for the size of the microbubbles to be at least equal to 60 µm.

## Patentansprüche

1. Verfahren für die Flotationsklärung von schwierigem Wasser, dessen Trübung über 30 NTU liegt und dessen Konzentration an Schwebstoffen SS mehr als 30 mg/L beträgt, insbesondere von belastetem Oberflächenwasser oder von kommunalem oder industriellem Abwasser, von Regenwasser und allen Arten von schwer flotierbarem Wasser, insbesondere mit einem hohen Prozentsatz an Mineralstoffen, oder für die Klärung von allen Arten von Wasser, die das Einleiten eines Flockungszusatzes erfordert und die Filtern oder Membrantechnologien, wie der Ultrafiltration, vorausgeht, umfassend:
- einen Koagulationsschritt (A1), im Laufe dessen eine Dosis von 10 bis 70 Gew.-% der Gesamtdosis an Koaguliermittel (1) in das zu behandelnde Wasser eingeleitet wird, wobei das Koaguliermittel von dreiwertigen Kationen, insbesondere Eisen- oder Aluminiumsalzen gebildet ist,
- einen Flockungsschritt (B), im Laufe dessen ein Einleiten von Flockungsmittel (2) in das Wasser, nach dem Koagulationsschritt vollzogen wird, um die Schwebeteilchen in Form von Flocken zu agglomerieren, wobei dieser Flockungsschritt umfasst:
- das Einleiten von Flockungsmittel in einen Bereich (B1) zum Mischen des Flockungsmittels (2),
- an das sich ein zweites Einleiten von Koaguliermittel (1a) mit 30 bis 90 Gew.-% der Gesamtdosis, nach dem Einleiten des Flockungsmittels, in einem Mischbereich (A2) anschließt,
- das Vergrößern der Flocken (3), welche für eine Flotation in einem einzigen Schritt geeignet sind, in einem Bereich (B2), im Anschluss an den Mischbereich (A2),
- und schließlich einen Schritt (C) zur Trennung mittels Flotation, im Laufe dessen in einem Flotationsgerät das ausgeflockte Wasser mit einer Emulsion von Mikrogasbläschen, im Allgemeinen Luft, gemischt wird, die sich an die Flocken anlagern und diese zur Oberfläche aufsteigen lassen, wo sie gesammelt und abgeführt werden, während das geklärte Wasser über den Boden des Flotationsgerätes abgeleitet wird.

2. Verfahren nach Anspruch 1, **dadurch gekennzeichnet, dass** das zu behandelnde Rohwasser für die Flotationsgeräte, denen ein Vordekanter vorgeschaltet ist, eine Trübung von über 100 NTU und eine Konzentration an Schwebstoffen SS von über 100 mg/L aufweist.

3. Verfahren nach Anspruch 1 oder 2, **dadurch gekennzeichnet, dass** es auf ein zu behandelndes schwieriges Rohwasser angewandt wird und das Einleiten eines Flockungszusatzes erfordert, wobei die verfahrensgemäße Behandlung Filtern oder Membrantechnologien, wie der Ultrafiltration, vorausgeht.

4. Verfahren nach einem der vorstehenden Ansprüche, **dadurch gekennzeichnet, dass** die Aufteilung der Gesamtdosis an Koaguliermittel zu etwa 50 % für eine jede der beiden Einleitungen erfolgt.

5. Verfahren nach einem der vorstehenden Ansprüche, wonach während des Flotationsschrittes die Mikrobläschenemulsion dadurch erhalten wird, dass ein Bruchteil des geklärten Wassers abgepumpt und in einem Kolben (P) druckbeaufschlagt wird, um eine große Menge an Gas, insbesondere Luft, zu lösen und um die Mikrobläschen durch Druckentlastung der druckbeaufschlagten Flüssigkeit in dem Flotationsgerät zu erzeugen, **dadurch gekennzeichnet, dass** der Druck der Druckbeaufschlagung in dem Kolben (P) bis auf 4 bar reduziert wird.

6. Verfahren nach einem der vorstehenden Ansprüche, wonach während des Flotationsschrittes die Mikrobläschenemulsion dadurch erhalten wird, dass ein Bruchteil des geklärten Wassers abgepumpt und in einem Kolben (P) druckbeaufschlagt wird, um eine große Menge an Gas, insbesondere Luft, zu lösen und um die Mikrobläschen durch Druckentlastung der druckbeaufschlagten Flüssigkeit in dem Flotationsgerät zu erzeugen, **dadurch gekennzeichnet, dass** der Druck der Druckbeaufschlagung in dem Kolben (P) schwach genug gewählt ist, damit die Größe der Mikrobläschen wenigstens gleich 60 µm beträgt.
